Europäisches Patentamt

European Patent Office

Office européen des brevets

(11) Numéro de publication: **0 237 107**

**A1**

## (12) DEMANDE DE BREVET EUROPEEN

(21) Numéro de dépôt: **87200319.9**

(51) Int. Cl.⁴: **H04N 5/74**

(22) Date de dépôt: **25.02.87**

(30) Priorité: **04.03.86 FR 8602992**

(43) Date de publication de la demande:
**16.09.87 Bulletin 87/38**

(84) Etats contractants désignés:
**DE FR GB IT**

(71) Demandeur: **Laboratoires d'Electronique et de Physique Appliquée L.E.P.**
**3, Avenue Descartes**
**F-94450 Limeil-Brévannes(FR)**
**FR**
Demandeur: **N.V. Philips' Gloeilampenfabrieken**
**Groenewoudseweg 1**
**NL-5621 BA Eindhoven(NL)**
**DE GB IT**

(72) Inventeur: **Polaert, Rémy**
**Société Civile SPID 209, rue de l'Université**
**F-75007 Paris(FR)**
Inventeur: **Tissot, Maurice**
**Société Civile SPID 209, rue de l'Université**
**F-75007 Paris(FR)**

(74) Mandataire: **Landousy, Christian et al**
**Société Civile S.P.I.D. 209, Rue de l'Université**
**F-75007 Paris(FR)**

(54) Relais optique fournissant une image projetée qui présente des caractères ayant une lisibilité accrue.

(57) L'invention concerne un relais optique (31) comportant une cible (12) d'un matériau électriquement isolant et laissant passer la lumière d'une manière dépendant du champ électrique parallèle à la direction de propogation de cette lumière, des moyens pour faire balayer une première face de cette cible par un faisceau électronique (33) contrôlé par un wehnelt (34), une anode (30), une lame (38) optiquement transparente et électriquement conductrice recevant le signal électrique d'information visuelle à partir d'un amplificateur (50) qui délivre un signal vidéo. Elle est remarquable en ce que le relais optique (31) comprend un autre amplificateur (52) qui applique, sur le wehnelt (34), une faible surmodulation issue du signal vidéo, afin d'accroître leur lisibilité. Le réglage de la surmodulation peut être effectué automatiquement à l'aide d'un intégrateur d'image (40).

Application : projection d'images ou de caractères alphanumériques.

FIG. 4

## RELAIS OPTIQUE FOURNISSANT UNE IMAGE PROJETEE QUI PRESENTE DES CARACTERES AYANT UNE LISIBILITE ACCRUE

L'invention concerne un relais optique comportant une cible d'un matériau électriquement isolant et laissant passer la lumière d'une manière dépendant du champ électrique parallèle à la direction de propagation de cette lumière, des moyens pour faire balayer une première face de cette cible par un faisceau électronique contrôlé par un wehnelt, une anode apte à recueillir les électrons secondaires émis sous l'action de ce faisceau, une lame optiquement transparente et électriquement conductrice disposée contre la deuxième face de la cible, cette lame recevant le signal électrique d'information visuelle à partir d'un amplificateur qui délivre un signal vidéo réalisant une modulation du potentiel de cible, celle-ci étant constituée en un matériau devenant ferro-électrique audessous d'une certaine température, dite température de Curie, au voisinage de laquelle fonctionne le relais optique.

Un relais optique de ce type, pour projecteur de télévision, a été décrit dans les brevets FR 1 473 212 et FR 1 479 284. Afin de mieux caractériser l'invention un rappel du principe de fonctionnement de ce relais optique est donné ci-après. De plus amples renseignements peuvent être obtenus dans les documents cités.

Le cadre de l'invention concerne la transformation d'un signal électrique à variation temporelle, représentant une information visuelle, en une image visible. On sait que c'est là l'un des rôles d'un poste récepteur de télévision.

Dans le tube "image" d'un tel récepteur, c'est le faisceau d'électrons qui remplit classiquement les trois fonctions fondamentales de cette transformation :

f1 -il fournit l'énergie qui doit apparaître sous forme lumi neuse : la puissance lumineuse du tube est donc toujours inférieure à la puissance transportée par le faisceau;

f2 -il réalise le balayage spatial de la surface de l'image;

f3 -il applique l'information visuelle.

En raison des fonctions f2 et f3 entre autres, la puissance du faisceau, et donc la brillance de l'image ne peuvent être augmentées autant qu'il le faudrait pour la projection sur un grand écran, par exemple.

C'est pourquoi il a été proposé de dissocier la fonction f1 confiée, par exemple, à une lampe à arc, des fonctions f2 et f3 confiées à ce que l'on appelle un "relais optique". Il utilise un cristal présentant un effet électro-optique appelé "Effet Pockels". Un cristal de phosphate diacide de potassium $KH_2PO_4$ appelé par la suite KDP, convient à cet usage.

Cet effet peut être partiellement et sommairement décrit comme suit : lorsque le cristal qui est un isolant électrique, est soumis à un champ électrique parallèle à son axe cristallographique c - (les trois axes cristallographiques a, b et c formant un trièdre trirectangle, l'axe c étant, le cas échéant, l'axe optique), l'indice n de ce cristal, pour des rayons lumineux se propageant dans la direction c et polarisés linéairement dans le plan ab, dépend de la direction de cette polarisation. Plus précisément, si l'on désigne par X et Y les bissectrices des axes a et b, et si l'on repère les paramètres du cristal relatifs à ces diverses directions par les lettres qui désignent ces dernières, on peut décrire que le diagramme des indices dans le plan ab devient une ellipse d'axes X et Y au lieu d'un cercle, et que la différence $n_x-n_y$ est proportionnelle au champ électrique appliqué. Il s'ensuit que si les rayons lumineux incidents sont polarisés parallèlement à l'axe a, par exemple, l'intensité lumineuse I traversant un polariseur de sortie sera $I = I_0 \sin^2 kV$ si la direction de polarisation de ce polariseur est parallèle à l'axe b, et $I = I_0 \cos^2 kV$ si cette direction est parallèle à l'axe a, $I_0$ étant égale à l'intensité lumineuse incidente s'il n'y a pas d'absorption parasite, V étant la différence de potentiel électrique entre les deux faces du cristal, et k un coefficient dépendant du matériau cristallin utilisé.

Pour obtenir une image, par projection à partir d'une lampe à travers cet ensemble, il suffit, selon ce qui a été dit précédemment, de faire régner un champ électrique parallèle à l'axe c, et de faire correspondre, en chaque point de la cible, la valeur de ce champ à la brillance du point correspondant de l'image à obtenir. Dans ce but, un faisceau électronique, issu d'un canon à électrons, et traversant des organes de déviation classiques, balaye la cible remplissant ainsi la fonction f2. Quant à la fonction f3, c'est-à-dire ici la commande du champ électrique, elle est également remplie par le faisceau de la manière suivante.

Lorsque les électrons de faisceau atteignent la surface de la cible, ils provoquent, si leur énergie est comprise dans les limites convenables et dans la mesure où le potentiel d'anode est suffisamment élevé, l'émission d'électrons secondaires en nombre plus grand que celui des électrons incidents. Il en résulte une élévation du potentiel électrique du point atteint, de sorte que la différence de potentiel entre l'anode et ce point diminue. Si les électrons -

du faisceau atteignent ce point en nombre suffisant, cette différence de potentiel devient négative et atteint une valeur telle (-3V par exemple), que chaque électron incident ne provoque plus l'émission que d'un seul électron secondaire. Le potentiel de ce point est ainsi fixé à une valeur limite par rapport à celui de l'anode. Il suffit pour cela que, compte tenu de la vitesse de balayage, l'intensité du faisceau soit suffisante. Le potentiel de l'anode étant constant, chaque passage du faisceau d'électrons fixe, comme il vient d'être dit, le potentiel d'un point quelconque A de la surface atteinte à une valeur $V_o$ indépendante de ce point et de l'instant de passage. Mais la charge électrique correspondante apparue en ce point dépend du potentiel de l'électrode de commande située à proximité, de l'autre côté de la cible.

Si l'on appelle VA le potentiel de cette électrode à l'instant de ce passage, cette charge est proportionnelle à VO-VA, VA représentant la valeur du signal d'information visuelle à l'instant de son passage.

La cible, dont la biréfringence dépend du champ électrique, est constituée par un monocristal de KDP, dont environ 95% de l'hydrogène a la forme d'hydrogène lourd (deutérium).

Or, l'effet Pockels est proportionnel, pour une épaisseur de cristal donnée, aux charges qui apparaissent sur les faces du cristal et donc, pour une tension de commande donnée, à la constante diélectrique de celui-ci. C'est pourquoi, on utilise une cible constituée en un cristal devenant ferroélectrique au-dessous d'une certaine température appelée température de Curie, et on opère avantageusement au voisinage de cette température, car la constante diélectrique atteint alors des valeurs très élevées et le relais optique peut fonctionner à l'aide de tensions de commande faciles à employer (l'effet Pockels étant proportionnel au produit $\epsilon$ V).

Les cristaux les plus courants qui présentent ce phénomène sont des sels acides, notamment du type KDP qui appartient à la classe des cristaux quadratiques et présente un axe optique parallèle à l'axe cristallographique c. Sa température de Curie est située vers -53°C. Au-dessus de la température de Curie, le DKDP est un cristal quadratique classe de symétrie $\overline{4}$.2 m et il a un comportement paraélectrique. En dessous de la température de Curie, le DKDP devient orthorhombique, classe de symétrie mm2, et il manifeste un comportement ferroélectrique : localement il y a polarisation spontanée et apparition de domaines ferroélectriques.

A la température ambiante, le cristal est anisotrope, mais au voisinage du point de Curie l'anisotropie devient extrêmement importante. Le changement d'état s'accompa gne de variations abruptes des propriétés physiques selon les axes du cristal :
-coefficients piézo-électriques
-coefficients électro-optiques
-constantes diélectriques $\epsilon_x$ et $\epsilon_z$.

Ainsi la constante diélectrique $\epsilon'_z$ passe d'une valeur d'environ 60 à la température ambients à une valeur de 30.000 à la température de Curie.

On sait que, du point de vue électrique, l'épaisseur apparente e du cristal de DKDP est
$$e = E.(\epsilon_x/\epsilon'_z)^{0,5}.$$

La cible apparait d'autant plus mince que le rapport $\epsilon_x/\epsilon'_z$ est plus petit, où $\epsilon'_z$ est la valeur de $\epsilon_z$ lorsque le cristal est bloqué mécaniquement. Dans un relais optique en effet, la lame monocristalline de DKDP, d'une épaisseur E voisine de 250 microns, est collée fermement sur un support rigide : une lame de fluorine de 5 mm d'épaisseur.

La cible du relais optique est donc habituellement refroidie vers -51°C, c'est-à-dire à une température légèrement supérieure au point de Curie. Dans ces conditions $\epsilon_x\epsilon'_z = 1/9$ et l'épaisseur apparente du cristal est environ 80 microns, ce qui confère au relais optique une bonne résolution d'image. En dessous du point de Curie ce rapport $\epsilon_x/\epsilon'_z$ est encore bien plus faible, ce qui améliore beaucoup la résolution d'image.

Or lorsqu'un tel relais optique est utilisé pour projeter des données telles que des traits et/ou des caractères alphanumériques, leur visibilité est fortement dépendante du format de balayage. Cela est manifeste lorsque l'on passe du standard de balayage 625 lignes au standard 1025 lignes. On observe alors que l'augmentation du nombre de lignes de balayage horizontal s'accompagne d'une atténuation importante du contraste des traits horizontaux, ce qui gêne la lisibilité des caractères alphanumériques projetés.

Cette atténuation du contraste des traits hori zontaux, en fonction du resserrement des lignes de balayage, est aussi vraie qu'il s'agisse de traits blancs sur fond noir ou de traits noirs sur fond blanc.

Inversement si on comprime le balayage horizontal, ce sont les traits verticaux qui deviennent moins visibles, tandis que si on dilate ce balayage horizontal, les traits verticaux deviennent à la fois plus larges et plus lumineux.

Les mêmes inconvénients apparaissent également, mais à un degré moindre, avec des images de type télévision.

Le but de l'invention est donc d'accroître la lisibilité principalement pour des données telles que des traits et/ou des caractères alphanumériques.

Pour cela, l'invention telle que définie dans le préambule est remarquable en ce que le relais optique comprend un autre amplificateur qui applique, sur le wehnelt du relais optique, une faible surmodulation issue du signal vidéo, et en liaison avec le niveau moyen d'éclairement global de l'image produite par la modulation du potentiel de cible seule, la polarité et l'amplitude de cette surmodulation peuvent être réglées afin de produire, pour des caractères clairs ou foncés respectivement un accroissement proportionnel de leur niveau d'éclairement ou de leur niveau d'obscurité.

Cette légère surmodulation appliquée sur le wehnelt produit une modulation du courant de faisceau qui s'ajoute à la modulation habituelle, qui elle est appliqée sur la cible, et qui constitue le mode habituel de fonctionnement opérant par stabilisation de potentiel à courant électronique constant. L'altération produite par la surmodulation consiste pour un caractère blanc à augmenter le courant de faisceau pour toutes les parties blanches de l'image. De ce fait, la surmodulation égalise la luminosité des parties horizontales et verticales des caractères et accroît leur visibilité. Mais la dose de surmodulation du courant de faisceau doit rester faible pour éviter un excés d'inscription du blanc par rapport au noir.

Pour réaliser cette surmodulation du courant de faisceau, on utilise un amplificateur qui applique à faible dose sur le wehnelt du relais optique une surmodulation issue du même signal vidéo que celui qui est appliqué sur la cible. Ainsi, avec une modulation de cible effectuée par exemple sous - 80 volts, le courant de faisceau stabilisé qui lui correspond est de 10 microampères. Dans le cas où l'on désire restituer des caractères blancs sur un fond noir, on superpose une surmodulation de +6 volts sur le wehnelt le courant passant alors à une valeur de 10,8 microampères. Cette variation est suffisamment faible pour ne pas dérégler la focalisation du faisceau.

Dans le cas inverse où l'on désire restituer des caractères noirs sur un fond blanc, il faut diminuer le courant de faisceau pour le blanc et augmenter le courant de faisceau pour les noirs. La polarité de la surmodulation est pour cela inversée et passe à -6 volts avec toujours une modulation de cible à - 80 volts.

Cette surmodulation est donc dépendante du contenu de l'image. Si ce contenu est sur le plan lumineux très peu modifié, par exemple avec un affichage régulier de caractères alphanumériques, le réglage de la surmodulation peut être opéré par l'utilisateur lorsque la nécessité apparaît. Mais lorsque ce contenu est très changeant et provoque de grandes variations d'éclairement de l'image, ce réglage de la surmodulation peut être effectué automatiquement à l'aide d'un intégrateur d'images, qui détermine le niveau moyen d'éclairement global de l'image. Cet intégrateur pilote la polarité et le taux de surmodulation à appliquer sur le wehnelt par l'intermédiaire de l'amplificateur.

L'invention sera mieux comprise à l'aide des figures suivantes, données à titre d'exemples non limitatifs, qui représentent :

figure 1 : une coupe de la partie essentielle du relais optique selon l'art antérieur,

figure 2 : un caractère à reproduire en A et un caractère reproduit avec défaut en B,

figure 3 : une représentation schématique du relais optique avec un amplificateur appliquant une surmodulation sur le wehnelt,

figure 4 : une représentation schématique identique à celle de la figure 3 avec un intégrateur d'image contrôlant l'amplificateur de surmodulation.

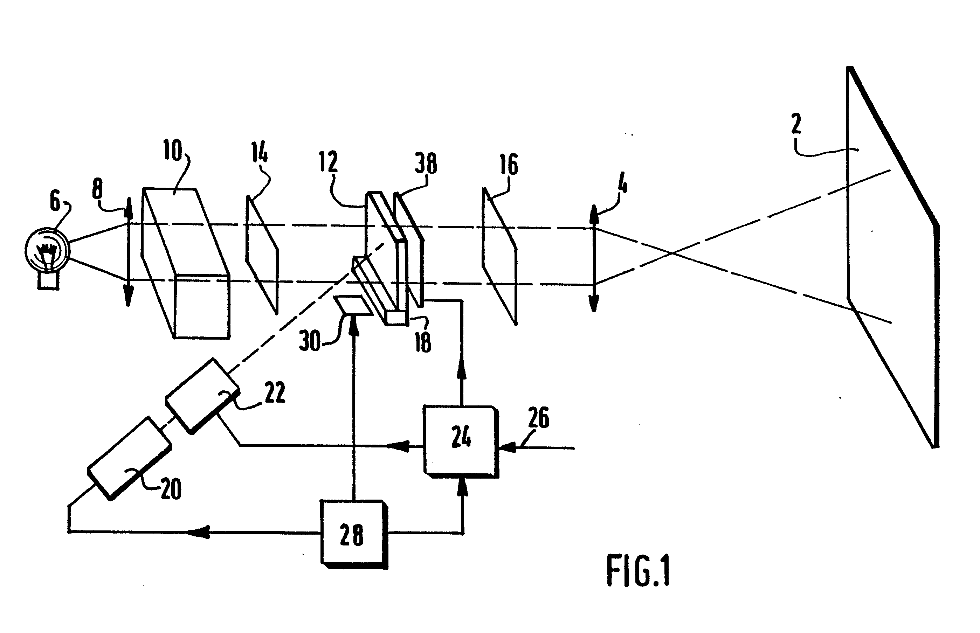

Sur la figure 1, sont schématiquement représentés, les organes essentiels d'un relais optique conforme à l'invention, et ceux qui coopèrent avec ce relais à l'obtention d'une image visible, projetée sur un écran 2 par une lentille de projection 4. La lumière est fournie par une lampe 6, représentée comme étant à incandescence, mais qui pourrait évidemment être de tout autre type. Cette lumière traverse une lentille de collimation 8, puis une cuve 10 dont le rôle est d'arrêter le rayonnement calorifique infrarouge. Le relais optique est essentiellement constitué par une cible 12, formée d'un monocristal parallélépipédique de KDP dont l'axe optique (c) est perpendiculaire aux grandes faces, et placée entre les deux polariseurs croisés 14 et 16 dont les plans de polarisation sont parallèles aux deux autres axes cristallographiques (a et b) du monocristal. Un échangeur thermique 18 est en contact avec la cible 12 et la maintient au voisinage de sa température de Curie. La face gauche de cette cible reçoit un faisceau d'électrons, représenté en pointillé et issu d'un canon à électrons 20. Ce faisceau balaye périodiquement toute la surface utile de la cible 12 sous l'action d'organes de déflexion 22 commandés par les signaux de balayage issus d'un récepteur 24 qui les élabore à partir des signaux de synchronisation qui lui sont fournis à son entrée 26 avec le signal d'information visuelle proprement dit. Un bloc 28 fournit à certains des organes déjà cités les tensions électriques continues qui leur sont nécessaires, ainsi qu'à une anode 30. Ce n'est que pour la clarté du dessin que celle-ci est représentée sous la forme d'une plaque parallèle au faisceau lumineux, car il est évident que cette disposition, très favorable au passage de la lumière ne l'est guère à la collection des électrons secondaires émis par tous les points de la surface de la cible 12 atteints par le faisceau électronique. C'est pourquoi, dans la pratique, l'anode est disposée parallèlement à la surface de la cible 12 et tout près de cell-ci. Comme elle doit être traversée par le faisceau d'électrons incidents et par la lumière, on lui donne une forme appropriée, celle d'une grille par exemple. Une lame 38 électriquement conductrice et optiquement transparente, à l'aide d'une mince couche d'or par exemple, est disposée derrière la cible 12. C'est à cette lame que le récepteur 24 applique le signal d'information visuelle.

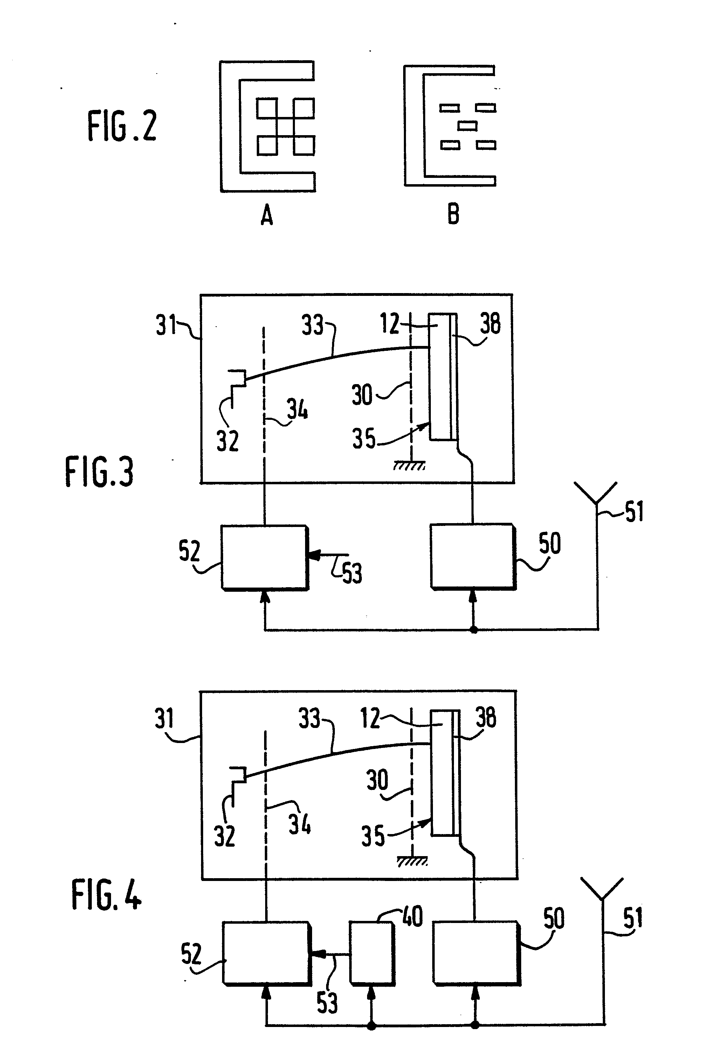

La figure 2 représente en A un caractère à reproduire formé de parties horizontales et verticales représentant la lettre C entourant cinq carrés en contact par des sommets. Lorsqu'une image est projetée, à l'aide d'un relais optique selon l'art antérieur, il se produit des inexactitudes de restitutions d'un tel caractère. En particulier avec un nombre élevé de lignes de balayage, par exemple 1025 lignes, les parties horizontales se trouvent amincies et les carrés deviennent ainsi non jointifs. Le dessin B reproduit incorrectement ces déformations car en plus il se produit une perte de définition du caractère ce qui peut rendre le caractère illisible.

Pour chiffrer quantitativement ce phénomène, on peut supposer que la visibilité d'un trait blanc est le produit de son amplitude crête P par sa largeur à mi-hauteur L. La visibilité relative d'un trait horizontal par rapport à celle d'un trait vertical peut s'exprimer par le rapport :

$$R = \frac{P_h \cdot L_h}{P_v \cdot L_v}$$

Idéalement, ce rapport doit être égal à 1.

Des mesures qui ont été effectuées selon le fonctionnement habituel ont montré que la luminosité des traits horizontaux n'est que 0,41 fois celle des traits verticaux. Cette détérioration dans la lisibilité des caractères est fonction des états de contraction et d'expansion de balayage trame et/ou lignes que l'on est conduit à utiliser.

Pour restituer à ce coefficient de visibilité relative une valeur proche de la valeur théorique égale à 1, on applique, selon l'invention, une faible surmodulation sur le wehnelt. Avec une tension de cible de -80 volts et une surmodulation de +6 volts, ce qui entraîne un accroissement du courant de faisceau de 10 à 10,8 microampères, un coefficient de visibilité relative égale à 1,1 a été obtenu. Les caractères ainsi traités correspondent à des caractères blancs sur un fond noir. Une telle surmodulation augmente ainsi le niveau du blanc. Lorsque l'on désire restituer des caractères noirs sur fond blanc il faut alors diminuer le niveau du blanc et appliquer une surmodulation ayant une polarité inverse de la précédente, soit -6 volts dans l'exemple choisi.

La figure 3 représente schématiquement un relais optique 31, tel qu'il est représenté sur la figure 1. Il comprend une cathode 32 émettant un faisceau d'électrons 33 qui traverse un wehnelt 34 et arrive sur la cible 12. La lame 38, qui reçoit le signal vidéo de l'amplificateur 50, module la charge de la face avant 35 de la cible qui s'effectue par le faisceau d'électrons 33 à courant initialement constant. L'anode-grille 30 reliée à la masse, contrôle le potentiel de cette face avant 35 de sorte que cette modulation initiale s'effectue en stabilisation de potentiel. Le signal vidéo en provenance d'une source vidéo représentée symboliquement dans l'exemple par une antenne 51 est introduit dans l'amplificateur 50. L'invention utilise un second amplificateur 52, relié également à la même source vidéo, qui applique sur le wehnelt 34 une faible surmodulation. Celle-ci module légèrement le courant de faisceau initialement constant et modifie de la sorte le potentiel de la face avant 35 de la cible.

Selon la nature des caractères à reproduire par exemple des caractères noirs (foncés) sur un fond blanc (clair) ou l'inverse, le taux et la polarité de la surmodulation doivent être ajustés. L'utilisateur, à l'aide d'une commande 53, peut donc effectuer ce réglage par rapport au niveau moyen d'éclairement global de l'image.

Mais il peut arriver que les variations de l'éclairement de l'image nécessitent des réglages plus rapides.

Pour cela, selon la figure 4, l'invention utilise un intégrateur d'image 40 relié à la source vidéo qui intègre le contenu lumineux de l'image sur une ou plusieurs trames ou dans une zone particulière de l'image, et effectue automatiquement le réglage du niveau et de la polarité de la surmodulation par rapport à ce niveau moyen d'éclairement global de l'image.

## Revendications

1. Relais optique comportant une cible d'un matériau électriquement isolant et laissant passer la lumière d'une manière dépendant du champ électrique parallèle à la direction de propogation de cette lumière, des moyens pour fair balayer une première face de cette cible par un faisceau électronique contrôlé par un wehnelt, une anode apte à recueillir les électrons secondaires émis sous l'action de ce faisceau, une lame optiquement transparente et électriquement conductrice disposée contre la deuxième face de la cible, cette lame recevant le signal électrique d'information visuelle à partir d'un amplificateur qui délivre un signal vidéo réalisant une modulation du potentiel de cible, celle-ci étant constituée en un matériau devenant ferro-électrique au-dessous d'une certaine température, dite température de Curie, au voisinage de laquelle fonctionne le relais optique, caractérisé en ce qu'il comprend un autre amplificateur qui applique, sur le wehnelt du relais optique, une faible surmodulation issue du signal vidéo, et en liaison avec le niveau moyen d'éclairement global de l'image produite par la modulation du potentiel de cible seule, la polarité et l'amplitude de cette surmodulation peuvent être réglées afin de produire, pour des caractères clairs ou foncés respectivement un accroissement proportionnel de leur niveau d'éclairement ou de leur niveau d'obscurité.

2. Relais optique selon la revendication 1, caractérisé en ce que le réglage de la surmodulation est effectué automatiquement à l'aide d'un intégrateur d'image qui détermine le niveau moyen d'éclairement global de l'image.

FIG.1

FIG.2

A          B

FIG.3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | 1985 SID INTERNATIONAL SYMPOSIUM DIGEST OF TECHNICAL PAPERS, Society for SID Information Display, 1ère édition, mai 1985, pages 266-269, Palisades Institute for Research Services, Inc., New York, US; A. FARRAYRE et al.: "14.4: Geometrical resolution improvement of sodern visualization system" * Page 266, colonne de gauche, lignes 32-47 * | 1 | H 04 N 5/74 |
| A | US-A-3 520 589 (ANGEL et al.) * Colonne 4, ligne 32 - colonne 5, ligne 5 * | 1 | |

DOMAINES TECHNIQUES
RECHERCHES (Int. Cl.4)

H 04 N
G 09 G
G 02 F

Le présent rapport de recherche a été établi pour toutes les revendications

| Lieu de la recherche | Date d'achèvement de la recherche | Examinateur |
|---|---|---|
| LA HAYE | 29-05-1987 | YVONNET J.W. |